# EUROPÄISCHE PATENTSCHRIFT

(11) **EP 2 578 991 B1**
(45) Veröffentlichungstag und Bekanntmachung des Hinweises auf die Patenterteilung: **12.03.2014**
(21) Anmeldenummer: 12183788.4
(22) Anmeldetag: 11.09.2012
(51) Int. Cl.: G01B 11/25, G01B 11/04, G01B 11/02

(54) **Optischer Sensor**
Optical sensor
Capteur optique

(30) Priorität: 06.10.2011 DE 202011051565 U
(43) Veröffentlichungstag der Anmeldung: 10.04.2013
(73) Patentinhaber: Leuze electronic GmbH + Co KG, 73277 Owen/Teck (DE)
(72) Erfinder: Essig, Horst, 73230 Kirchheim/Teck (DE); Geiger, Fabian, 70771 Leinfelden-Echterdingen (DE); Klaß, Dieter, 72636 Frickenhausen (DE); Weber, Jürgen-Ralf, 73061 Ebersbach (DE)
(74) Vertreter: Ruckh, Rainer Gerhard

(56) Entgegenhaltungen:
- EP-A1- 2 306 145
- WO-A1-2008/131474
- US-A1- 2009 059 242
- US-B1- 6 795 200

## Beschreibung

Die Erfindung betrifft einen optischen Sensor gemäß dem Oberbegriff des Anspruchs 1.

Ein derartiger optischer Sensor ist aus der EP 2 306 145 A1 bekannt. Dieser optische Sensor umfasst eine Lichtstrahlen emittierende Sendeeinheit und einen Empfänger, welcher eine matrixförmige Anordnung von Empfangselementen aufweist. Die Projektion der Lichtstrahlen bildet auf einer zu detektierenden Objektstruktur eine Lichtlinie, die auf den Empfänger abgebildet wird. In einer Auswerteeinheit ist durch Auswertung der Empfangssignale der Empfangselemente nach dem Triangulationsprinzip ein Entfernungsprofil der Objektstruktur bestimmbar. In der Auswerteeinheit wird wenigstens ein Auswertefenster generiert, welches in einer Richtung einen längs der Lichtlinie verlaufenden Ortsbereich und in einer zweiten Richtung einen Entfernungsbereich umfasst. Durch Auswertung der Anzahl von in das Auswertefenster fallenden Objektpunkten wird eine binäre Zustandsinformation generiert.

Mit diesem optischen Sensor kann durch die linienförmige Ausbildung der vom Sender emittierten Lichtstrahlen ein ausgedehnter Überwachungsbereich erfasst werden, wobei vorteilhaft ist, dass hierzu keine bewegten Teile für eine Ablenkung der Lichtstrahlen benötigt werden. Anstelle dessen generiert der Sender eine konstante Lichtlinie auf einer zu untersuchenden Objektstruktur. Somit können mit dem erfindungsgemäßen optischen Sensor simultan mehrere Objekte gleichzeitig erfasst werden.

Durch die nach dem Triangulationsprinzip erfolgende Entfernungsmessung werden Distanzinformationen über zu detektierende Objekte erfasst. Dadurch können Objekte ortsaufgelöst erfasst werden, wobei insbesondere Konturinformationen von Objekten erhalten werden können.

Durch die Festlegung von einem oder mehreren Auswertefenstern können in diesen gezielt unterschiedliche Objekte oder Objektstrukturen erfasst werden. Dabei bilden die Auswertefenster bestimmte Ausschnitte aus dem Überwachungsbereich, wobei jedes Auswertefenster zudem einen definierten Distanzbereich umfasst. Durch Vorgabe dieses Distanzbereichs kann die Ortsauflösung bei der Objekterfassung im jeweiligen Auswertefenster gezielt vorgegeben werden, wodurch beispielsweise Objekte gezielt vor Hintergrundstrukturen erfassbar sind.

Mit der Generierung einer binären Zustandsinformation für jedes Auswertefenster wird für jedes Auswertefenster eine Aussage darüber erhalten, ob eine erwartete Objektstruktur oder ein erwartetes Objekt erkannt wird oder nicht. Mit dieser Auswertung erfolgt einerseits eine sichere und genaue Objektdetektion. Andererseits wird durch die Generierung der binären Zustandsinformationen aus einer Vielzahl von Objektpunkten eine Datenreduktion erreicht, so dass die Auswertung nur geringe Rechenzeiten beansprucht.

Die Auswertung der Objektpunkte in einem Auswertefenster ist dabei generell auf reine Zählvorgänge beschränkt.

Der Erfindung liegt die Aufgabe zugrunde, die Funktionalität eines optischen Sensors der eingangs genannten Art zu erweitern.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor umfasst eine Lichtstrahlen emittierende Sendeeinheit und einen Empfänger, welcher eine matrixförmige Anordnung von Empfangselementen aufweist. Die Projektion der Lichtstrahlen bildet auf einer zu detektierenden Objektstruktur eine Lichtlinie, die auf den Empfänger abgebildet wird. In einer Auswerteeinheit ist durch Auswertung der Empfangssignale der Empfangselemente nach dem Triangulationsprinzip ein Entfernungsprofil der Objektstruktur bestimmbar. In der Auswerteeinheit wird wenigstens ein Auswertefenster generiert, welches in einer Richtung einen längs der Lichtlinie verlaufenden Ortsbereich und in einer zweiten Richtung einen Entfernungsbereich umfasst. Mittels der Auswerteeinheit werden die im Ortsbereich am weitesten im Auswertefenster außenliegenden Messpunkte innerhalb des Auswertefensters als linker Grenzmesspunkt und rechter Grenzmesspunkt bestimmt und zur Bestimmung von Objektdaten herangezogen.

Die Funktionalität des erfindungsgemäßen optischen Sensors 1 ist somit dahingehend erweitert, dass anhand von in ein Auswertefenster fallenden Messpunkten ortsaufgelöste Informationen über ein Objekt, insbesondere die Lagen von Kanten eines Objekts, bestimmt werden können.

Der Anwender gibt hierzu eines oder mehrere Auswertefenster in geeigneter Weise vor, wobei hierzu vorteilhaft der optische Sensor die Differenz der Positionswerte des linken Grenzmesspunkts und rechten Grenzmesspunkts in z-Richtung nur dann als gültiger Wert für die Höhe des Objekts übernommen wird, wenn nur der linke Grenzmesspunkt oder der rechte Grenzmesspunkt von dem Objekt und der andere Grenzmesswert von einem Untergrund, auf dem das Objekt angeordnet ist, stammt.

Dabei werden insbesondere auch die mit dem optischen Sensor aktuell ermittelten Messpunkte angezeigt, so dass der Anwender in Abhängigkeit dieser Messpunkte die Auswertefenster in geeigneter Weise vorgeben kann.

Durch die vom Anwender frei wählbaren Auswertefenster, die an die zu detektierenden Objektgrößen und Objektgeometrien einfach anpassbar sind, können Kantenpositionen von Objekten schnell und mit geringem Rechenaufwand bestimmt werden. Ein wesentlicher Vorteil der Erfindung besteht dabei darin, dass durch die Auswertung der Messpunkte des optischen Sensors im Auswertefenster eine starke Datenreduktion durchgeführt wird, die eine sehr schnelle Auswertung und dennoch hohe Nachweissicherheit ermöglicht. Im Wesentlichen brauchen für eine Objektdetektion, insbesondere eine Kantendetektion innerhalb des Auswertefensters nur die beiden Grenzmesspunkte, das heißt der linke Grenzmesspunkt und rechte Grenzmesspunkt herangezogen werden.

Die damit bestimmten Kantenpositionen können direkt an einem Ausgang des optischen Sensors als Ausgangssignale ausgegeben werden.

Alternativ oder zusätzlich wird in der Auswerteeinheit die Differenz der Positionswerte des linken Grenzmesspunkts und rechten Grenzmesspunkts in x-Richtung als Maß für die Breite eines Objekts gebildet und als Ausgangssignale ausgegeben.

Besonders vorteilhaft wird die Differenz der Positionswerte des linken Grenzmesspunkts und rechten Grenzmesspunkts in x-Richtung in der Auswerteeinheit nur dann als gültiger Wert für die Breite eines Objekts übernommen, wenn der linke Grenzmesspunkt und der rechte Grenzmesspunkt nicht mit einer Grenze des Auswertefensters zusammenfallen.

Damit werden fehlerhafte Breitenbestimmungen für den Fall vermieden, dass eine Objektkante außerhalb des Auswertefensters liegt.

Die Funktionalität des erfindungsgemäßen optischen Sensors kann dahingehend noch erweitert sein, wenn in der Auswerteeinheit die Differenz der Positionswerte des linken Grenzmesspunkts und rechten Grenzmesspunkts in z-Richtung als Maß für die Höhe eines Objekts gebildet und als Ausgangssignal ausgegeben wird.

Damit können mit der Höhe von Objekten neben den Kantenpositionen oder Breiten von Objekten weitere Geometriedaten von Objekten ermittelt werden.

Die Höhe eines Objekts kann mit den Messpunkten innerhalb eines Auswertefensters nur dann bestimmt werden, dass innerhalb des Auswertefensters eine Objektkante des Objekts liegt sowie auch der Untergrund auf dem das Objekt steht.

Vorteilhaft wird diese Anforderung im optischen Sensor dadurch überprüft, dass die Differenz der Positionswerte des linken Grenzmesspunkts und rechten Grenzmesspunkts in z-Richtung nur dann als gültiger Wert für die Höhe des Objekts übernommen wird, wenn nur der linke Grenzmesspunkt oder der rechte Grenzmesspunkt von dem Objekt und der andere Grenzmesswert von einem Untergrund, auf dem das Objekt angeordnet ist, stammt.

Für den Fall, dass das Auswertefenster nicht sofort in der oben genannten Weise positioniert wird, wird in einem mehrstufigen Prozess, in dem eine Folge von Auswertefenstern vorgegeben wird, das zur Höhenbestimmung des Objekts geeignete Auswertefenster iterativ bestimmt.

Hierzu wird für ein auf einem Untergrund angeordneten Objekt ein vorangehendes Auswertefenster definiert, in welches nur das Objekt mit wenigstens einer Kante, nicht jedoch der Untergrund fällt. Durch Ermittlung des linken Grenzmesspunkts und rechten Grenzmesspunkts wird für dieses Auswertefenster die Lage der wenigstens einen Kante bestimmt. In Abhängigkeit dieser Messwerte ist wenigstens ein Auswertefenster so definiert, dass von dem linken Grenzmesspunkt und rechten Grenzmesspunkt nur ein Grenzmesspunkt vom Objekt und der zweite Grenzmesspunkt vom Untergrund stammt, wobei der linke Grenzmesspunkt und rechte Grenzmesspunkt dieses Auswertefensters für die Bestimmung der Höhe des Objekts herangezogen werden.

Gemäß einer vorteilhaften Ausführungsform werden als linker Grenzmesspunkt und rechter Grenzmesspunkt jeweils die im Auswertefenster am weitesten außenliegenden Messpunkte übernommen, auf welche eine Mindestanzahl N von aufeinanderfolgenden Messpunkten innerhalb des Auswertefensters folgt.

Damit wird die Zuverlässigkeit der Objekterfassung erheblich gesteigert, da fehlerhafte Messpunkte, bedingt durch Störungen des optischen Sensors oder hervorgerufen durch Fehlstellen oder Inhomogenitäten von Objekten, eliminiert werden können.

Alternativ oder zusätzlich zur Bestimmung eines linken Grenzmesspunkts und rechten Grenzmesspunkts innerhalb eines Auswertefensters kann auch in der Auswerteeinheit als Grenzmesspunkt die Messpunkte mit dem in z-Richtung höchsten und kleinsten Wert herangezogen werden.

Diese Ausführungsform eignet sich allgemein zur Ermittlung von Höhenprofilen von Objekten.

Gemäß einer weiteren vorteilhaften Ausgestaltung der Erfindung werden in der Auswerteeinheit für Auswertefenster in Abhängigkeit der dort registrierten Messpunkte logische Ausgangsgrößen ermittelt, welche in der Auswerteeinheit logisch verknüpft werden.

Als logisch verknüpfbare Ausgangsgrößen können anhand der in den einzelnen Auswertefenstern vorhandenen Messpunkte beispielsweise Kriterien abgeleitet werden, ob eine gültige Messung vorliegt oder nicht.

Bei der Bestimmung von Kantenlagen anhand des linken Grenzmesspunkts und rechten Grenzmesspunkts in einem Auswertefenster kann ein solches Gültigkeitskriterium sein, ob auf den jeweiligen Grenzmesspunkt die erforderliche ununterbrochene Folge eine Mindestzahl von Messpunkten innerhalb des Auswertefensters folgt.

Generell kann im optischen Sensor die erfindungsgemäße Definition von Auswertefenstern zur Bestimmung von Objektgeometriedaten auch mit der in EP 2 306 145 A1 vorgenommenen Auswertung im Auswertefenster kombiniert werden. Generell können dann auch logische Verknüpfungen logischer Ausgangsgrößen von Auswertefenstern der vorliegenden Erfindung und von Auswertefenstem wie in der EP 2 306 145 A1 beschrieben, vorgenommen werden.

Die Erfindung wird im Folgenden anhand der Zeichnungen erläutert. Es zeigen:
- Figur 1:: Schematische Darstellung eines Ausführungsbeispiels des erfindungsgemäßen optischen Sensors.
- Figur 2:: Draufsicht auf den Empfänger des optischen Sensors gemäß Figur 1.
- Figur 3:: Erste Variante einer Definition eines Auswertefensters bei einer Objektdetektion mit dem optischen Sensor gemäß Figur 1.
- Figur 4:: Zweite Variante einer Definition eines Auswertefensters bei einer Objektdetektion mit dem optischen Sensor gemäß Figur 1.
- Figur 5, b:: Darstellung einer Folge von Auswertefenstern für eine Objektdetektion mit dem optischen Sensor gemäß Figur 1.
- Figur 6:: Darstellung einer Definition mehrerer Auswertefenster zur Detektion verschiedener Objekte.

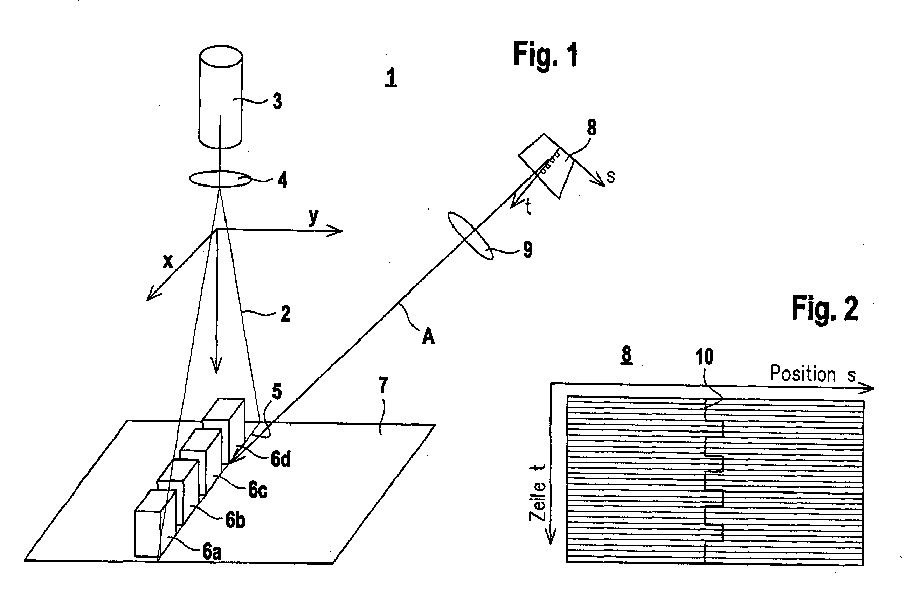

Figur 1 zeigt schematisch ein Ausführungsbeispiel des erfindungsgemäßen optischen Sensors 1. Der optische Sensor 1 bildet einen Lichtschnittsensor, bei welchem nach dem Triangulationsprinzip Entfernungsmessungen durchgeführt werden, wodurch eine positionsempfindliche Objektdetektion in einem Überwachungsbereich ermöglicht wird.

Der optische Sensor 1 weist eine Sendeeinheit bestehend aus einem Lichtstrahlen 2 emittierenden Sender 3 und einer diesem nachgeordneten Sendeoptik 4, auf. Der Sender 3 ist im vorliegenden Fall von einem Laser, insbesondere einer Laserdiode gebildet. Der Laser emittiert einen gebündelten Laserstrahl mit etwa kreisförmigem Strahlquerschnitt. Zur Ausbildung der in den Überwachungsbereich geführten Lichtstrahlen 2 dient die Sendeoptik 4, die als Aufweitungsoptik ausgebildet ist. Durch die Sendeoptik 4 werden aus dem Laserstrahl Lichtstrahlen 2 mit einem längs einer Geraden linienförmigen Strahlquerschnitt geformt, so dass auf der Oberfläche einer zu detektierenden Objektstruktur eine Lichtlinie 5 generiert wird.

Mit der so ausgebildeten Lichtlinie 5 können Gegenstände, insbesondere auch simultan mehrere Gegenstände gleichzeitig erfasst werden. Bei dem Ausführungsbeispiel gemäß Figur 1 sind diese vier in separaten Spuren angeordnete Objekte 6a - 6d, die auf einem Förderband 7 gefördert werden. Die Förderrichtung des Förderbands 7 verläuft in y-Richtung. Die Objekte 6a - 6d sind in x-Richtung in Abstand nebeneinander angeordnet. Dementsprechend verläuft auch die Lichtlinie 5 des optischen Sensors 1 in x-Richtung, so dass die Objekte 6a - 6d simultan von den Lichtstrahlen 2 erfasst werden.

Der optische Sensor 1 weist weiterhin einen ortsauflösenden Empfänger 8 mit einer matrixförmigen, das heißt einer in Zeilen und Spalten gegliederten Anordnung von Empfangselementen auf. Der Empfänger 8 besteht dabei vorzugsweise aus einem CMOS- oder CCD-Array. Weiterhin ist dem Empfänger 8 eine Empfangsoptik 9 zugeordnet, mittels derer von Objektstrukturen rückreflektierte Lichtstrahlen 2 auf den Empfänger 8 abgebildet werden.

Der Empfänger 8 ist in Abstand zum Sender 3 angeordnet. Zudem ist die optische Achse A des Empfängers 8 um einen Neigungswinkel bezüglich der in z-Richtung verlaufenden Strahlachse des Laserstrahls geneigt. In Figur 1 ist dabei die Zeilenrichtung des Empfängers 8 mit t bezeichnet, die Spaltenrichtung mit s. Die Zeilenrichtung t verläuft zumindest näherungsweise in x-Richtung.

Der optische Sensor 1, dessen Komponenten in einem nicht dargestellten Gehäuse integriert sind, weist weiterhin eine ebenfalls nicht dargestellte Auswerteeinheit auf, die von einem Mikroprozessor oder dergleichen gebildet ist. Die Auswerteeinheit dient einerseits zur Ansteuerung des Senders 3 und andererseits zur Auswertung der Empfangssignale der Empfangselemente des Empfängers 8.

Mit dem so ausgebildeten optischen Sensor 1 können Entfernungsprofile von Objektstrukturen ermittelt werden. Dies ist anhand von Figur 2 veranschaulicht, die eine Draufsicht auf den Empfänger 8 des optischen Sensors 1 zeigt. Die auf eine Objektstruktur geführte Lichtlinie 5 wird ortsaufgelöst auf den Empfänger 8 ausgebildet. Dies zeigt Figur 2 in Form einer Konturlinie 10 entsprechend der Objektstruktur in Figur 1, bestehend aus den vier Objekten 6a - 6d auf dem Förderband 7. Dabei definieren Positionen in Spaltenrichtung s die jeweiligen Höhenwerte. Bei bekannter Lage des Empfängers 8 relativ zum Sender 3 wird die Konturlinie 10 in ein Entfernungsprofil umgerechnet, das heißt in einzelne Höhenwerte z in Abhängigkeit der Position x in Längsrichtung der Lichtlinie 5.

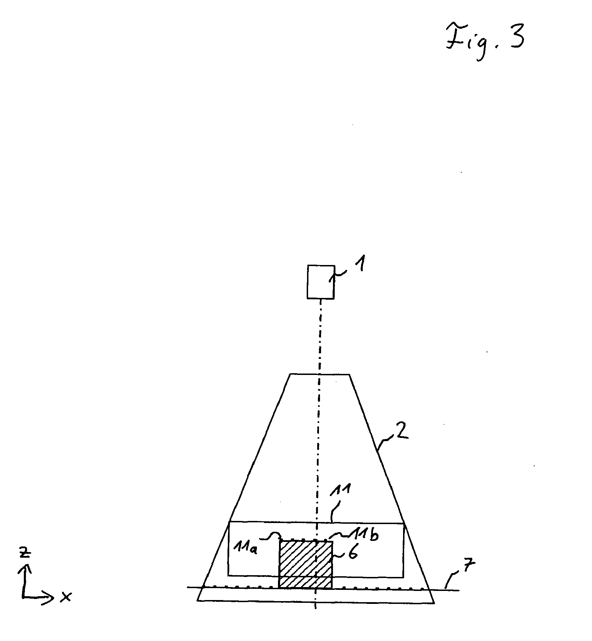

Figur 3 zeigt ein erstes Ausführungsbeispiel zur Detektion eines auf einem Förderband 7 angeordneten Objekts 6. In Figur 3 wie auch in den folgen Figuren sind schematisch die mit dem optischen Sensor 1 ermittelten Messpunkte als Punkte auf den Oberflächen des Objekts 6 und des Förderbands 7 veranschaulicht. Der Übersichtlichkeit halber ist in Figur 3 nur eine relativ kleine Anzahl von Messpunkten dargestellt. Tatsächlich ist eine erheblich größere Anzahl von Messpunkten vorhanden, entsprechend der Anzahl t der Empfangselemente des Empfängers 8.

Die Folge der Messpunkte wird einem Anwender auf einer dem optischen Sensor 1 zugeordneten, nicht dargestellten Anzeigeeinheit angezeigt. Diese kann beispielsweise von einem Terminal gebildet sein. Über das Terminal kann der Anwender, wie in Figur 3 dargestellt, ein geeignet gewähltes Auswertefenster 11 vorgeben. Generell kann der Anwender auch mehrere Auswertefenster 11 vorgeben. Der Anwender wählt das Auswertefenster 11 in Abhängigkeit der vorzunehmenden Messaufgabe.

Im vorliegenden Fall sollen die Kantenlagen des Objekts 6 und auch die Breite des Objekts 6 bestimmt werden. Wie aus Figur 3 ersichtlich ist das Auswertefenster 11 so gewählt, dass alle vom Objekt 6 stammenden Messpunkte innerhalb des Auswertefensters 11 liegen, wogegen jedoch alle Messpunkte, die vom Förderband 7 stammen, außerhalb des Auswertefensters 11 liegen.

In der Auswerteeinheit werden nur die Messpunkte innerhalb des Auswertefensters 11 ausgewertet, wodurch eine erhebliche Datenreduktion erzielt wird. Aus der Folge der Messpunkte im Auswertefenster 11 werden die im Ortsbereich, das heißt in x-Richtung am weitesten außenliegenden Messpunkte bestimmt, wobei ein erster, der linken Grenze des Auswertefensters 11 zugewandter Grenzmesspunkt den linken Grenzmesspunkt 11 a und ein zweiter, der rechten Grenze des Auswertefensters 11 zugewandter Grenzmesspunkt den rechten Grenzmesspunkt 11b bildet.

Die x-Position des linken Grenzmesspunkts 11a definiert die linke Kantenposition des Objekts 6. Die x-Position des rechten Grenzmesspunkts 11b definiert die rechte Kantenposition des Objekts 6. Diese Kantenpositionen können über einen nicht dargestellten Ausgang des optischen Sensors 1 ausgegeben werden.

Alternativ kann vor Ausgabe des linken Grenzmesspunkts 11a und rechten Grenzmesspunkts 11b auch eine Fehlerprüfung dieser Messwerte durchgeführt werden. Hierzu wird geprüft, ob auch dem linken Grenzmesspunkt 11a oder rechten Grenzmesspunkt 11b jeweils eine Mindestanzahl von N Messpunkte auf den linken Grenzmesspunkt 11a oder rechten Grenzmesspunkt 11b folgt, die eine ununterbrochene Folge von Messpunkten bilden und alle innerhalb des Auswertefensters 11 liegen. Nur wenn diese Bedingung erfüllt ist, wird der linke Grenzmesspunkt 11a bzw. der rechte Grenzmesspunkt 11b als gültige Kantenposition übernommen. Ist dies nicht die Folge, wird ausgehend von einem außerhalb des Auswertefensters 11 liegenden Messpunkt der nächste innerhalb des Auswertefensters 11 liegende Messpunkt als neuer linker Grenzmesspunkt 11a bzw. rechter Grenzmesspunkt 11b übernommen, wobei dann für diesen Grenzmesspunkt von neuem geprüft wird, ob auf diesen eine Mindestzahl N von aufeinanderfolgenden Messpunkten innerhalb des Auswertefensters 11 folgt.

Bei dem Ausführungsbeispiel gemäß Figur 3 kann weiterhin die Breite des Objekts 6 bestimmt werden und als weitere Ausgangsgröße am Ausgang des optischen Sensors 1 ausgegeben werden. Die Breite des Objekts 6 wird dadurch bestimmt, dass die vorzugsweise betragsmäßige Differenz der x-Werte des linken Grenzmesspunkts 11 a und rechten Grenzmesspunkts 11b bestimmt wird.

Auch hier kann eine Gültigkeitsprüfung durchgeführt werden, wobei in diesem Fall für das Vorliegen eines gültigen Werts für die Breite des Objekts 6 gefordert wird, dass weder der linke Grenzmesspunkt 11a noch der rechte Grenzmesspunkt 11b mit einer Grenze des Auswertefensters 11 zusammenfallen dürfen. In diesem Fall wäre nämlich mit dem Auswertefenster 11 das Objekt 6 nicht vollständig erfasst, so dass die Differenz der x-Positionswerte des linken Grenzmesspunkts 11 a und rechten Grenzmesspunkts 11b kein Maß für Obj ektbreite darstellen würden.

Wie aus Figur 3 ersichtlich, liegt das Auswertefenster 11 vollständig in dem von den Lichtstrahlen 2 erfassten Erfassungsbereich. Prinzipiell könnte das Auswertefenster 11 auch so vergrößert werden, dass dessen obere Ecken außerhalb des Erfassungsbereichs liegen, da dort keine Messpunkte vorhanden sind.

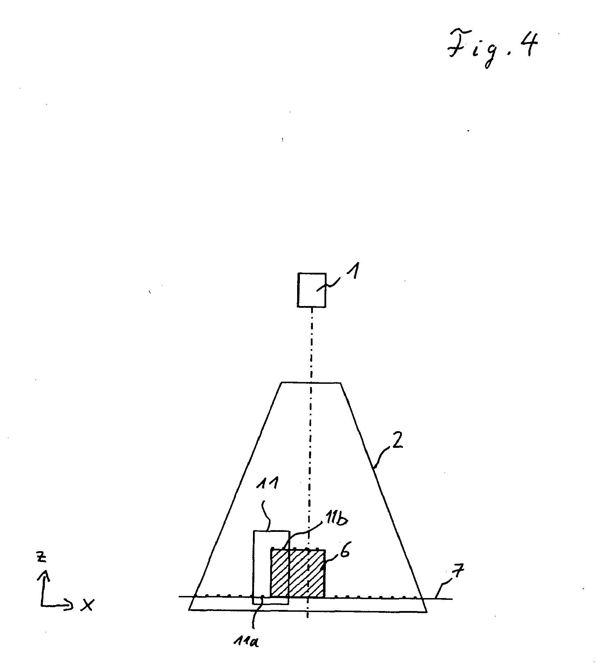

Figur 4 zeigt ein weiteres Ausführungsbeispiel, bei welchem durch ein geeignet gewähltes Auswertefenster 11 die Höhe eines auf einem Förderband 7 angeordneten Objekts 6 bestimmt werden kann. Wie aus Figur 4 ersichtlich, ist hierzu das Auswertefenster 11 so gesetzt, dass eine Kante des Objekts 6 innerhalb des Auswertefensters 11 und damit angrenzend Messpunkte von dem Objekt 6 und von dem Förderband 7 im Auswertefenster 11 liegen.

Auch in diesem Fall werden, analog zum Ausführungsbeispiel gemäß Figur 3, der linke Grenzmesspunkt 11 a und der rechte Grenzmesspunkt 11 b als am weitesten außenliegende Messpunkte innerhalb des Auswertefensters 11 bestimmt. Die Höhenbestimmung des Objekts 6 erfolgt dann derart, dass die vorzugsweise betragsmäßige Differenz der z-Positionswerte des linken Grenzmesspunkts 11a und des rechten Grenzmesspunkts 11b bestimmt wird. Da der linke Grenzmesspunkt 11a vom Förderband 7 stammt und der rechte Grenzmesspunkt 11b vom Objekt 6 stammt, liefert diese Differenzbildung ein zuverlässiges Maß für die Höhenbestimmung des Objekts 6. Die ermittelte Höhe wird als Ausgangssignal über den Ausgang des optischen Sensors 1 ausgegeben.

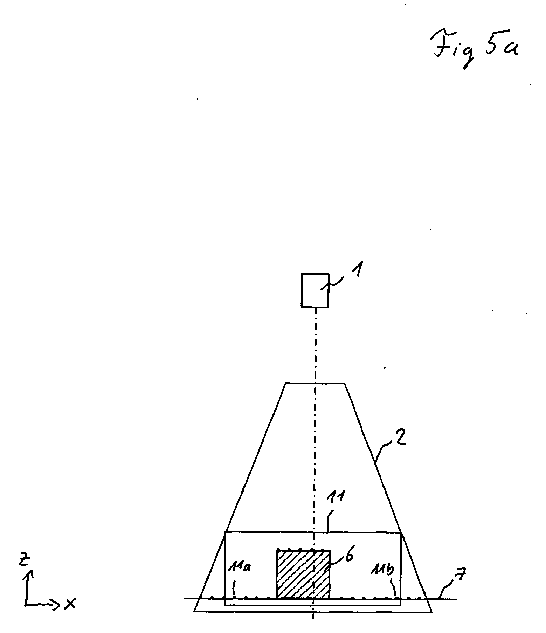

Figur 5a zeigt ein Ausführungsbeispiel einer Definition eines Auswertefensters 11, bei welchem es nicht möglich ist, die Höhe des Objekts 6 zu bestimmen. In diesem Fall liegen sowohl alle Messpunkte, die vom Objekt 6 stammen, als auch beidseits daran liegende Messpunkte, die vom Förderband 7 stammen, innerhalb des Auswertefensters 11. Auch in diesem Fall werden aus den Messpunkten Grenzmesspunkte bestimmt, die von oben am weitesten außenliegenden Messpunkten innerhalb des Auswertefensters 11 gebildet sind. Dabei bildet wieder ein Messpunkt den linken Grenzmesspunkt 11a und ein Grenzmesspunkt den rechten Grenzmesspunkt 11b. In diesem Fall sind der linke Grenzmesspunkt 11a und der rechte Grenzmesspunkt 11b vom Messpunkt, die vom Förderband 7 stammen, gebildet. Wenn zur Höhenbestimmung des Objekts 6 die Differenz der z-Positionswerte des linken Grenzmesspunkts 11a und rechten Grenzmesspunkts 11b gebildet wird, ergibt sich ein Wert, der nahezu bei Null liegt oder allgemein ein Wert, der kein Maß für die Höhe des Objekts 6 liefert.

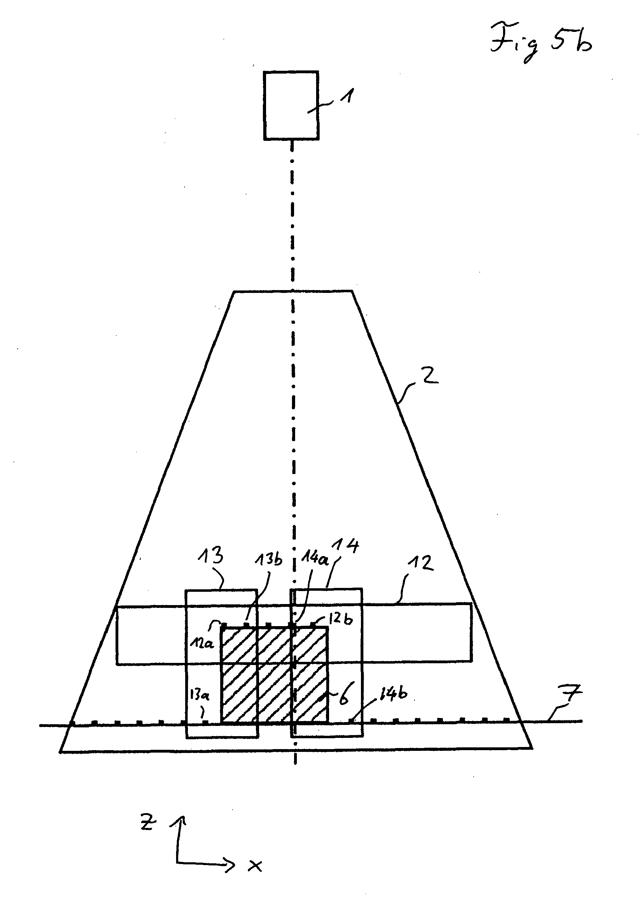

Um eine Höhenbestimmung des Objekts 6 durchführen zu können, werden ausgehend von der Situation in Figur 5a iterativ weitere Auswertefenster 12, 13, 14 wie in Figur 5b definiert.

In einem ersten Schritt wird das in Figur 5b dargestellte Auswertefenster 12 definiert, das sich von dem Auswertefenster 11 in Figur 5a dadurch'unterscheidet, dass die Messpunkte, die vom Förderband 7 stammen, nicht mehr im Auswertefenster 12 enthalten sind. Der linke Grenzmesspunkt 12a und rechte Grenzmesspunkt 12b, die für dieses Auswertefenster 12 bestimmt werden, geben die Kantenlagen des Objekts 6 an.

Ausgehend von diesen Kantenlagen werden die Auswertefenster 13, 14 definiert, wobei die linke Kante des Objekts 6 in das Auswertefenster 13 und die rechte Kante des Objekts 6 in das Auswertefenster 14 fällt.

In einem weiteren Schritt wird nun für das Auswertefenster 13 der linke Grenzmesspunkt 13a und der rechte Grenzmesspunkt 13b bestimmt, wobei nun der linke Grenzmesspunkt 13a ein Messpunkt vom Förderband 7 ist und der rechte Grenzmesspunkt 13b ein Messpunkt vom Objekt 6 ist. Durch eine Differenzbildung der z-Positionswerte des linken Grenzmesspunkts 13a und des rechten Grenzmesspunkts 13b ergibt sich die Höhe des Objekt 6.

Ebenso wird in einem weiteren Schritt für das Auswertefenster 14 der linke Grenzmesspunkt 14a und der rechte Grenzmesspunkt 14b bestimmt, wobei der linke Grenzmesspunkt 14a ein Messpunkt vom Objekt 6 ist und der rechte Grenzmesspunkt 14b ein Messpunkt vom Förderband 7 ist. Damit wird durch eine Differenzbildung der z-Positionswerte des linken Grenzmesspunkts 14a und des rechten Grenzmesspunkts 14b ebenfalls die Höhe des Objekts 6 erhalten.

Als Ausgabegröße für die Höhe des Objekts 6 kann nun der Differenzwert des linken Grenzmesspunkts 13a und des rechten Grenzmesspunkts 13b oder der Differenzwert des linken Grenzmesspunkts 14a und des rechten Grenzmesspunkts 14b oder der Mittelwert beider Differenzwerte ausgegeben werden.

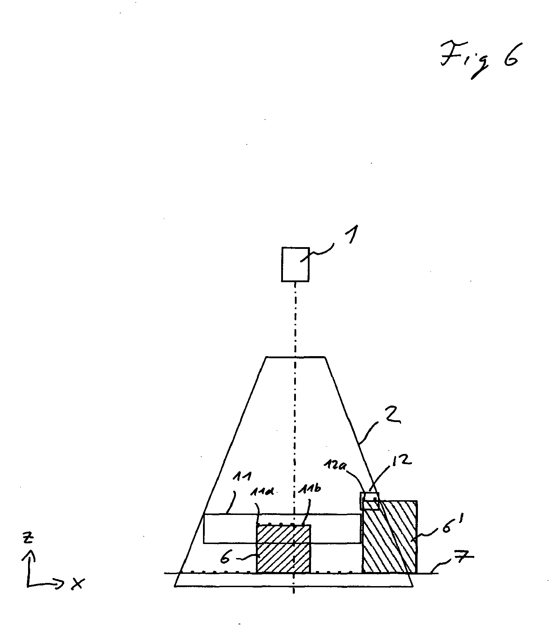

Figur 6 zeigt ein Ausführungsbeispiel, bei welchem ein Objekt 6 auf einem Förderband 7 relativ zu einem Referenzobjekt 6' in Form eines Anschlags oder dergleichen angeordnet ist. Zur Detektion des Objekts 6 wird das Auswertefenster 11 verwendet. Der linke Grenzmesspunkt 11a und der rechte Grenzmesspunkt 11b innerhalb dieses Auswertefensters 11 liefern die Kantenpositionen des Objekts 6. Zur Detektion des Referenzobjekts 6' wird das Auswertefenster 12 verwendet. Der linke Grenzmesspunkt 12a in diesem Auswertefenster 12 liefert die Position der linken Kante des Referenzobjekts 6'. Anhand dieser Informationen kann die Positionierung des Objekts 6 relativ zum Referenzobjekt 6' kontrolliert werden.

### Bezugszeichenliste

- (1): Optischer Sensor
- (2): Lichtstrahlen
- (3): Sender
- (4): Sendeoptik
- (5): Lichtlinie
- (6): Objekt
- (6'): Referenzobjekt
- (7): Förderband
- (8): Empfänger
- (9): Empfangsoptik
- (10): Konturlinie
- (11): Auswertefenster
- (11a): linker Grenzmesspunkt
- (11b): rechter Grenzmesspunkt
- (12): Auswertefenster
- (12a): linker Grenzmesspunkt
- (12b): rechter Grenzmesspunkt
- (13): Auswertefenster
- (13a): linker Grenzmesspunkt
- (13b): rechter Grenzmesspunkt
- (14): Auswertefenster
- (14a): linker Grenzmesspunkt
- (14b): rechter Grenzmesspunkt

## Patentansprüche

1. Optischer Sensor (1) mit einer Lichtstrahlen (2) emittierenden Sendeeinheit, mit einem Empfänger (8), welcher eine matrixförmige Anordnung von Empfangselementen aufweist, wobei die Projektion der Lichtstrahlen (2) auf einer zu detektierenden Objektstruktur eine Lichtlinie (5) bildet, die auf den Empfänger (8) abgebildet wird, und mit einer Auswerteeinheit, in welcher durch Auswertung der Empfangssignale der Empfangselemente nach dem Triangulationsprinzip ein Entfernungsprofil der Objektstruktur bestimmbar ist, wobei in der Auswerteeinheit wenigstens ein Auswertefenster (11) generiert wird, welches in einer ersten Richtung (x-Richtung) einen längs der Lichtlinie (5) verlaufenden Ortsbereich und in einer zweiten Richtung (z-Richtung) einen Entfernungsbereich umfasst, **dadurch gekennzeichnet, dass** das Auswertefenster (11) von einem Anwender vorgegeben werden kann, so dass dieses an zu detektierende Objektgrößen und Objektgeometrien anpassbar ist, dass mittels der Auswerteeinheit die im Ortsbereich am weitesten im Auswertefenster (11) außenliegenden Messpunkte innerhalb des Auswertefensters (11) als linker Grenzmesspunkt (11a) und rechter Grenzmesspunkt (11b) bestimmt werden, und dass für eine Objektdetektion nur die beiden Grenzmesspunkte (11a, 11b) herangezogen werden.

2. Optischer Sensor nach Anspruch 1, **dadurch gekennzeichnet, dass** die Positionswerte des linken Grenzmesspunkts (11a) und rechten Grenzmesspunkts (11b) die Kantenlagen eines Objekts (6) darstellende Ausgangssignale bilden.

3. Optischer Sensor nach einem der Ansprüche 1 oder 2, **dadurch gekennzeichnet, dass** in der Auswerteeinheit die Differenz der Positionswerte des linken Grenzmesspunkts (11a) und rechten Grenzmesspunkts (11b) in x-Richtung als Maß für die Breite eines Objekts (6) gebildet und als Ausgangssignale ausgegeben wird.

4. Optischer Sensor nach Anspruch 3, **dadurch gekennzeichnet, dass** die Differenz der Positionswerte des linken Grenzmesspunkts (11a) und rechten Grenzmesspunkts (11b) in x-Richtung in der Auswerteeinheit nur dann als gültiger Wert für die Breite eines Objekts (6) übernommen wird, wenn der linke Grenzmesspunkt (11a) und der rechte Grenzmesspunkt (11b) nicht mit einer Grenze des Auswertefensters (11) zusammenfallen.

5. Optischer Sensor nach einem der Ansprüche 1 bis 4, **dadurch gekennzeichnet, dass** in der Auswerteeinheit die Differenz der Positionswerte des linken Grenzmesspunkts (11a) und rechten Grenzmesspunkts (11b) in z-Richtung als Maß für die Höhe eines Objekts (6) gebildet und als Ausgangssignal ausgegeben wird.

6. Optischer Sensor nach Anspruch 5, **dadurch gekennzeichnet, dass** die Differenz der Positionswerte des linken Grenzmesspunkts (11a) und rechten Grenzmesspunkts (11b) in z-Richtung nur dann als gültiger Wert für die Höhe des Objekts (6) übernommen wird, wenn nur der linke Grenzmesspunkt (11a) oder der rechte Grenzmesspunkt (11b) von dem Objekt (6) und der andere Grenzmesswert von einem Untergrund, auf dem das Objekt (6) angeordnet ist, stammt.

7. Optischer Sensor nach Anspruch 6, **dadurch gekennzeichnet, dass** für ein auf einem Untergrund angeordneten Objekt (6) ein vorangehendes Auswertefenster (12) definiert wird, in welches nur das Objekt (6) mit wenigstens einer Kante, nicht jedoch der Untergrund fällt, dass durch Ermittlung des linken Grenzmesspunkts (12a) und rechten Grenzmesspunkts (12b) für dieses Auswertefenster (12) die Lage der wenigstens einen Kante bestimmt wird, und dass in Abhängigkeit dieser Messwerte wenigstens ein Auswertefenster (13) so definiert ist, dass von dem linken Grenzmesspunkt (13a) und rechten Grenzmesspunkt (13b) nur ein Grenzmesspunkt vom Objekt (6) und der zweite Grenzmesspunkt vom Untergrund stammt, wobei der linke Grenzmesspunkt (13a) und rechte Grenzmesspunkt (13b) dieses Auswertefensters (13) für die Bestimmung der Höhe des Objekts (6) herangezogen werden.

8. Optischer Sensor nach einem der Ansprüche 1 bis 7, **dadurch gekennzeichnet, dass** als linker Grenzmesspunkt (11a) und rechter Grenzmesspunkt (11b) jeweils die im Auswertefenster (11) am weitesten außenliegenden Messpunkte übernommen werden, auf welche eine Mindestanzahl N von aufeinanderfolgenden Messpunkten innerhalb des Auswertefensters (11) folgt.

9. Optischer Sensor nach einem der Ansprüche 1 bis 6, **dadurch gekennzeichnet, dass** in der Auswerteeinheit als Grenzmesspunkt die Messpunkte mit dem in z-Richtung höchsten und kleinsten Wert herangezogen werden.

10. Optischer Sensor nach einem der Ansprüche 1 bis 9, **dadurch gekennzeichnet, dass** in der Auswerteeinheit für Auswertefenster (11) in Abhängigkeit der dort registrierten Messpunkte logische Ausgangsgrößen ermittelt werden, welche in der Auswerteeinheit logisch verknüpft werden.

11. Optischer Sensor nach einem der Ansprüche 1 bis 10, **dadurch gekennzeichnet, dass** dieser Mittel zur visuellen Darstellung und zur graphischen Vorgabe von Auswertefenstern (11) aufweist.

## Claims

1. Optical sensor (1) with a transmitting unit emitting light beams (2), with a receiver (8) having a matrix-shaped arrangement of receiving elements, wherein the projection of the light beams (2) on an object structure to be detected forms a line of light (5) imaged on the receiver (8), and with an evaluating unit in which through evaluation of the received signals of the receiving elements in accordance with the triangulation principle a distance profile of the object structure can be determined, wherein generated in the evaluating unit is at least one evaluation window (11) which in a first direction (x direction) comprises a local region extending along the line of light (5) and in a second direction (z direction) comprises a distance area, **characterised in that** the evaluation window (11) can be predetermined by a user so that this is adaptable to object sizes and object geometries to be detected, that by means of the evaluating unit the measuring points lying in the local area furthest outwardly in the evaluation window (11) are determined within the evaluation window (11) as lefthand limit measurement point (11a) and righthand limit measurement point (11b) and that only the two limit measurement points (11a, 11b) are utilised for object detection.

2. Optical sensor according to claim 1, **characterised in that** the position values of the lefthand limit measurement point (11 a) and righthand limit measurement point (11 b) form output signals representing the edge positions of an object (6).

3. Optical sensor according to one of claims 1 and 2, **characterised in that** the difference of the position values of the lefthand limit measurement point (11a) and righthand limit measurement point (11 b) in x direction are formed in the evaluating unit as a measure for the width of an object (6) and are issued as output signals.

4. Optical sensor according to claim 3, **characterised in that** the difference of the position values of the lefthand limit measurement point (11a) and righthand limit measurement point (11 b) in x direction are taken over in the evaluating unit as a valid value for the width of an object (6) only when the lefthand limit measurement point (11a) and the righthand limit measurement point (11 b) do not coincide with a boundary of the evaluation window (11).

5. Optical sensor according to any one of claims 1 to 4, **characterised in that** the difference of the position values of the lefthand limit measurement point (11a) and righthand limit measurement point (11b) in z direction is formed in the evaluating unit as a measure for the height of an object (6) and is issued as an output signal.

6. Optical sensor according to claim 5, **characterised in** the difference of the position values of the lefthand limit measurement point (11a) and righthand limit measurement point (11b) in z direction is taken over as a valid value for the height of the object (6) only when only the lefthand limit measurement point (11a) or the righthand limit measurement point (11b) originates from the object (6) and the other limit measurement value originates from a substrate on which the object (6) is arranged.

7. Optical sensor according to claim 6, **characterised in that** a preceding evaluation window (12) is defined for an object (6) arranged on a substrate, into which window only the object (6) falls by at least one edge, but not the substrate, that the position of the at least one edge is determined by ascertaining the lefthand limit measurement point (12a) and righthand limit measurement point (12b) for this evaluation window (12) and that at least one evaluation window (13) is so defined in dependence on these measurement values that of the lefthand limit measurement point (13a) and righthand limit measurement point (13b) only one limit measurement point originates from the object (6) and the second limit measurement point originates from the substrate, wherein the lefthand limit measurement point (13a) and righthand limit measurement point (13b) of this evaluation window (13) are utilised for determination of the height of the object (6).

8. Optical sensor according to any one of claims 1 to 7, **characterised in that** the respective measurement points, which lie furthest outwardly in the evaluation window (11) and which are followed by a minimum number N of successive measurement points within the evaluation window (11), are taken over as lefthand limit measurement point (11 a) and righthand limit measurement point (11b).

9. Optical sensor according to any one of claims 1 to 6, **characterised in that** the measurement points with the highest and smallest value in z direction are utilised in the evaluating unit as limit measurement point.

10. Optical sensor according to any one of claim 1 to 9, **characterised in that** logical output magnitudes which are logically linked in the evaluating unit are determined in the evaluating unit for evaluation windows (11) in dependence on the measurement points registered there.

11. Optical sensor according to any one of claims 1 to 10, **characterised in that** this comprises means for visual representation and for graphical predetermination of evaluation windows (11).

## Revendications

1. Capteur optique (1) avec une unité émettrice émettant des rayons lumineux (2), avec un récepteur (8) qui présente une disposition matricielle d'éléments de réception, la projection des rayons lumineux (2) sur une structure d'objet à détecter formant une ligne lumineuse (5) qui est reproduite sur le récepteur (8), et avec une unité d'évaluation dans laquelle un profil de distance de la structure d'objet peut être déterminé selon le principe de triangulation par évaluation des signaux de réception des éléments de réception, au moins une fenêtre d'évaluation (11) étant générée dans l'unité d'évaluation, laquelle comprend, dans une première direction (direction x), une plage de localisation s'étendant le long de la ligne lumineuse (5) et, dans une deuxième direction (direction z), une plage de distance, **caractérisé en ce que** la fenêtre d'évaluation (11) peut être définie par un utilisateur, de sorte que celle-ci peut être adaptée aux tailles d'objets et géométries d'objets à détecter, **en ce qu'**au moyen de l'unité d'évaluation, les points de mesure situés dans la zone de localisation le plus loin vers l'extérieur dans la fenêtre d'évaluation (11) sont déterminés, à l'intérieur de la fenêtre d'évaluation (11), comme point de mesure limite gauche (11a) et point de mesure limite droit (11b), et **en ce que** seuls les deux points de mesure limites (11a, 11b) sont pris en compte pour une détection d'objet.

2. Capteur optique selon la revendication 1, **caractérisé en ce que** les valeurs de position du point de mesure limite gauche (11a) et du point de mesure limite droit (11b) forment des signaux de sortie représentant les positions des arêtes d'un objet (6).

3. Capteur optique selon une des revendications 1 ou 2, **caractérisé en ce que** la différence des valeurs de position du point de mesure limite gauche (11a) et du point de mesure limite droit (11b) dans la direction x est formée dans l'unité d'évaluation comme mesure de la largeur d'un objet (6) et délivrée en tant que signal de sortie.

4. Capteur optique selon la revendication 3, **caractérisé en ce que** la différence des valeurs de position du point de mesure limite gauche (11a) et du point de mesure limite droit (11b) dans la direction x est prise en compte comme valeur valide de la largeur d'un objet (6) dans l'unité d'évaluation seulement si le point de mesure limite gauche (11a) et le point de mesure limite droit (11b) ne coïncident pas avec une limite de la fenêtre d'évaluation (11).

5. Capteur optique selon une des revendications 1 à 4, **caractérisé en ce que** la différence des valeurs de position du point de mesure limite gauche (11a) et du point de mesure limite droit (11b) dans la direction z est formée dans l'unité d'évaluation comme mesure de la hauteur d'un objet (6) et délivrée en tant que signal de sortie.

6. Capteur optique selon la revendication 5, **caractérisé en ce que** la différence des valeurs de position du point de mesure limite gauche (11a) et du point de mesure limite droit (11b) dans la direction z est prise en compte comme valeur valide de la hauteur de l'objet (6) seulement si seul le point de mesure limite gauche (11a) ou le point de mesure limite droit (11b) provient de l'objet (6) et l'autre valeur de mesure limite d'un support sur lequel l'objet (6) est disposé.

7. Capteur optique selon la revendication 6, **caractérisé en ce qu'**une fenêtre d'évaluation antérieure (12) est définie pour un objet (6) disposé sur un support, dans laquelle entre seulement l'objet (6) avec au moins une arête, mais pas le support, **en ce que** la position de ladite au moins une arête est déterminée par détermination du point de mesure limite gauche (12a) et du point de mesure limite droit (12b) pour cette fenêtre d'évaluation (12), et **en ce qu'**au moins une fenêtre d'évaluation (13) est définie en fonction de ces valeurs de mesure de façon que du point de mesure limite gauche (13a) et du point de mesure limite droit (13b) seulement un point de mesure limite provienne de l'objet (6) et le deuxième point de mesure limite du support, le point de mesure limite gauche (13a) et le point de mesure limite droit (13b) de cette fenêtre d'évaluation (13) étant pris en compte pour la détermination de la hauteur de l'objet (6).

8. Capteur optique selon une des revendications 1 à 7, **caractérisé en ce que** les points de mesure situés le plus à l'extérieur dans la fenêtre d'évaluation (11), qui sont suivis d'un nombre minimum N de points de mesure successifs à l'intérieur de la fenêtre d'évaluation (11), sont pris en compte respectivement comme point de mesure limite gauche (11a) et point de mesure limite droit (11b).

9. Capteur optique selon une des revendications 1 à 6, **caractérisé en ce que** les points de mesure ayant la valeur la plus élevée et la plus petite dans la direction z sont pris en compte comme points de mesure limites dans l'unité d'évaluation.

10. Capteur optique selon une des revendications 1 à 9, **caractérisé en ce que** dans l'unité d'évaluation, des grandeurs de sortie logiques sont déterminées pour les fenêtres d'évaluation (11) en fonction des points de mesure qui y sont enregistrés, lesquelles sont combinées logiquement dans l'unité d'évaluation.

11. Capteur optique selon une des revendications 1 à 10, **caractérisé en ce que** celui-ci présente des moyens pour la représentation visuelle et la définition graphique de fenêtres d'évaluation (11).
